# EUROPEAN PATENT SPECIFICATION

(11) **EP 0 885 151 B1**
(45) Date of publication and mention of the grant of the patent: **10.11.1999**
(21) Application number: 96925171.9
(22) Date of filing: 24.07.1996
(51) Int. Cl.: B65D 75/36

(54) **Package**
Packung
Emballage

(30) Priority: 28.07.1995 NL 1000897
(43) Date of publication of application: 23.12.1998
(73) Proprietor: Ligra B.V., 6051 KN Maasbracht (NL)
(72) Inventor: LINSSEN, Ronaldus, Josephus, Marie, NL-6067 HG Linne (NL); WOUTERS, Gerardus, Wilhelmus, NL-1645 RC Ursem (NL)
(74) Representative: Fieret, Johannes, Ir.
(86) International application number: NL9600300
(87) International publication number: WO9705038

(56) References cited:
- FR-A- 2 483 367
- GB-A- 1 456 895
- US-A- 3 303 930
- US-A- 3 326 370
- US-A- 4 485 920
- US-A- 5 297 679

## Description

The invention relates to a package comprising a box bounding a cavity which is open on one side and a plate which closes the open side, which box is near the open side provided with a flange extending away from said box, whereby said plate comprises two fixed-together parts, the first part being provided with an opening through which the box projects whilst the flange of the box is slidably clamped between the first and second part and said parts being provided with parallel folding lines located near the flange of said box.

With a package of this type as known from US-A-3,326,370 the first part is provided with a tab (58) located near one side of the box. Around the tab (58) a stop section (25) is located which is located inside the box (10) and limits the withdrawal of the box (10).

A drawback of this package is that it is possible to open the package, remove a part of the content of the box (10) and to close the package again, without this being indicated through a view on the package. Furthermore, due to the stop section located inside the box, a part of the flange of the box is visible which is not attractive from an aesthetic point of view. However, even more important is the fact that the package is only suitable for a rectangular shaped box since other kinds of boxes would only be supported along a small part of the flange of the box. The flanges need in fact to be rectangular to provide a correct slidable movement of the box with respect to the parts of the plate and to prevent pivoting movements of the box with respect to the plate. Because of this the amount of material required for the box and flange is relatively large.

The object of the invention is to provide a package whereby tampering of the package is always visible, whilst nor the shape of the box nor the flange does not need to be rectangular.

This object is achieved with the package according to the invention in that:
- the first part is provided with two spaced apart imaginary tangent lines, which extend transversally from the folding line and touch the recess;
- the first part being further provided with two lines of separation, each line of separation extending from said folding line to the recess and being located on one of said tangent lines or on an area of the first part located outside an area which is delimited by the imaginary tangent lines;
- the lines of separation and/or the folding line on sides of the lines of separation facing away from each other being provided with perforations;
- the first part is further provided with a foldable section delimited by the folding line, the recess and the two lines of separation; and
- said foldable section together with sections of the first and second parts located on a side of the folding line facing away from the recess are jointly foldable about the folding lines with respect to the sections of the parts located on the side of the folding lines facing towards said recess;
- whereby by folding the section about the folding lines, the perforated lines are torn apart after which the box is slidable between the parts across the folding lines.

The flange of a box is clamped between the two parts of the plate, whereby the box projects through a recess in said first part. When the plate is folded in two near one end of the box, the part of the first plate part that is located between the lines of separation and the folding line will remain attached to the folded part of the plate, thus providing room for moving out the box. The flange located near the end of the box will be released and the box can be moved out of the plate. The folding line of the first part is thereby either cut through on sides of the lines of separation facing away from each other by parts of the flange extending on sided of the lines of separation facing away from each other, or torn open by the forces exerted during folding.

Because the left and right lines of separation are located on the left or right side respectively of the tangent lines or on the tangent lines it is possible to use a box whose shape is for example adapted to that of the product to be packed, whereby the tangent lines bound the box. The flange may be adapted to the box, so that the amount of material required for the box and for the flange can be minimized.

It is not possible to remove products from the package without damaging said package. Any theft of a product from the package will immediately be noticeable. Because the box and the plate are moved apart a forced separation is obtained and the box and the plate can be disposed of separately.

It has to be noted that a package is known from British patent GB-B-1,456,895 whereby the flange surrounding the box is partially clamped between the two parts of the plate. The flange is positioned on the plate near one end of the box. The plate is to that end provided with two cuts (3) extending transversely to the box. The box can be moved into and out of the plate by sliding the flange between the cuts. The flange can be locked against sliding out by means of a separate lip. A drawback of the known package is that products can be stolen from the package in a simple manner without the package showing any signs of this.

Furthermore it has to be noted that from the US patent US-A-5,297,679 a package is known whereby the first part is provided with a removable panel (16) located near one side of the box. The second part is provided with a cover (22) aligned with the panel (16) and covering an access aperture (28). After removal of the panel (16), the box is slidable between the two parts to a position in which products can be taken out of the box through the access aperture (28). A drawback of this package is that the paper plate and the plastic box remain connected due to which normally the total package will be disposed of without separation of the box and the plate. Another drawback is the fact that the box and the flange need to be rectangular in order to obtain a package of this type. Because of this the amount of material required for the box and flange is relatively large.

One embodiment of a package according to the invention is characterized in that said first part is provided with perforations located on the folding line, which are positioned on sides of the lines of separation facing away from each other.

As a result of this the folding line can simply be cut through by means of the flange.

Another embodiment of the package according to the invention is characterized in that said lines of separation comprise lines of cut or are provided with perforations. When the lines of separation are lines of cut, relatively little force is required for folding the plate. When perforations are provided, slightly more force is required for folding the plate, whereby perforations are extended into a common line of cut during folding, but on the other hand an additional protection against unauthorized opening is obtained.

Another embodiment of the package according to the invention is characterized in that the two parts are folded together.

In this way it is possible to obtain a package which is provided with text or illustrations on either side, whilst the plate only needs to be printed on one side. The folded-together and fixed-together sides of the two parts need not be printed.

The invention will be explained in more detail hereafter with reference to the drawing, in which:
Figure 1 is a perspective front view of a plate of a package according to the invention;
Figure 2 is a rear view of the plate shown in Figure 1;
Figure 3 is a perspective view of a package according to the invention;
Figures 4-6 show the opening of a package according to the invention;
Figure 7 shows a detail of the package shown in Figure 3, seen in the direction of arrows VII-VII;
Figure 8 shows a detail of the package according to the invention seen in the direction of arrows VIII-VIII;
Figure 9 shows a detail of the package according to the invention; and
Figure 10 is a front view of a second embodiment of a package according to the invention.

Like parts are numbered alike in the Figures.

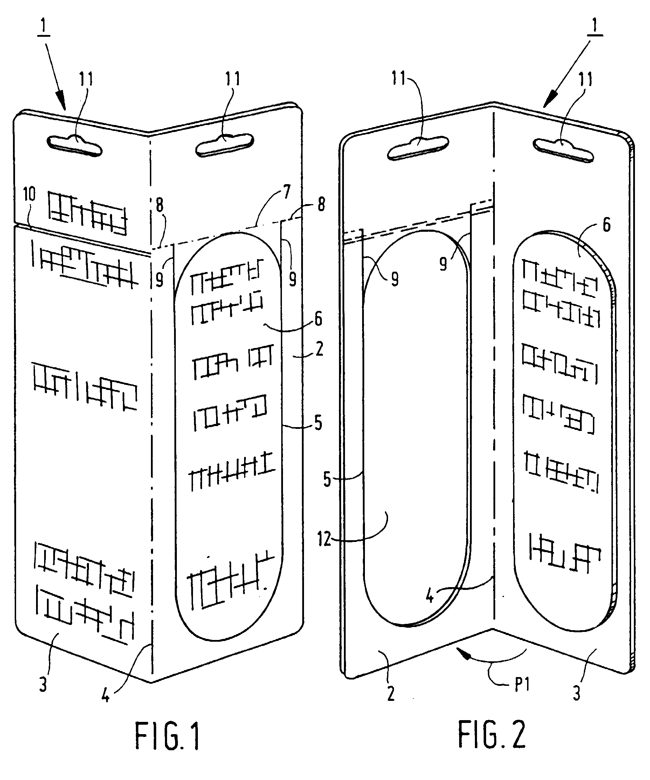

Figure 1 shows a front view of a cardboard plate for a package according to the invention. The plate 1 comprises two parts 2, 3, which can be folded with respect to each other about a folding line 4. The first part 2 has a residual part 6 bounded by lines of cut 5, which can be pressed out of part 1 and which is connected to part 1 in a few points only. The first part 2 is furthermore provided with perforations 8 located on a folding line 7. Lines of cut 9 extending transversely to folding line 7 extend between said perforations 8 and said lines of cut 5. The second part 3 of plate 1 is provided with a groove 10, which is positioned lower, seen in Figure 1, than the parallel folding line 8. The two parts 2, 3 are furthermore provided with eye-shaped recesses 11, by which the package to be formed can be suspended. The side of the plate which can be seen in Figure 1 is printed with text and/or illustrations.

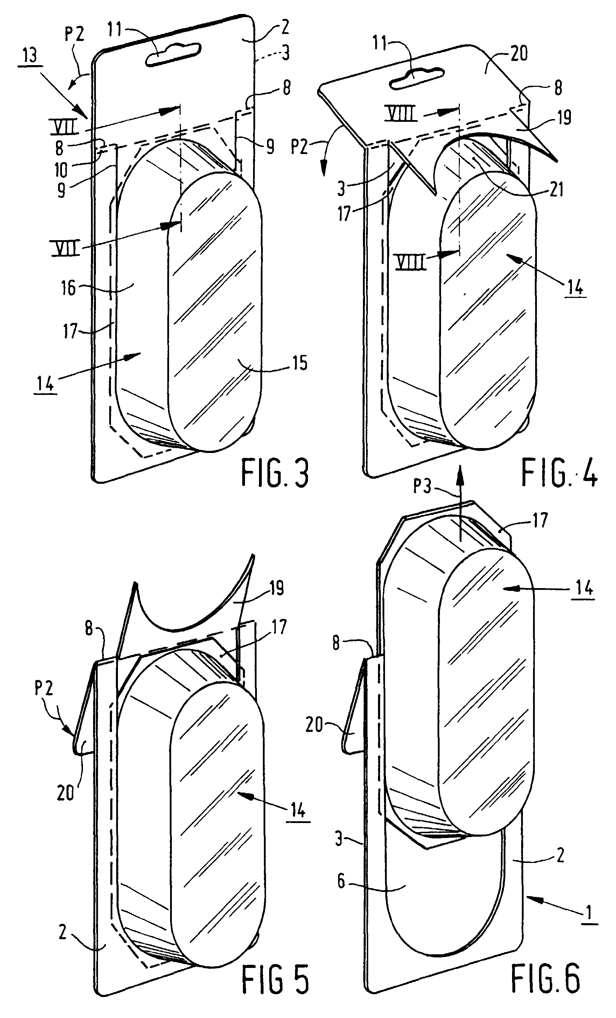

Figure 2 shows the rear side of plate 1. The residual part 6 has been pressed out of part 2, thus forming a recess 12 which is bounded by the lines of cut 5. The residual part 6 has been glued to the second part 3, opposite recess 12, whereby the side of the residual part 6 that is provided with text and/or illustrations faces away from said second part 3. The sides of parts 2, 3 that are discernable in Figure 3 are provided with glue.

Figure 3 shows a package 13 according to the invention comprising the plate 1 and a box 14 fixed between parts 2, 3 of plate 1. The box 14, which is made of transparent plastic material, comprises a bottom 15 and walls 16 extending substantially transversely to bottom 15. The box 14 is open on one side facing away from the bottom. Near the open side the walls 16 are provided with flanges 17 extending substantially transversely to the walls 16. The package 13 is made in the following manner. Box 14 is filled with products to be packed (not shown), after which the box 14 is passed through the recess 12 formed in the first part 2, whereby the flanges 17 will abut against the rear side of said first part 2. Then the second part 3 is folded about folding 4 in the direction shown by arrow P1 of Figure 2, and the parts 2, 3 are glued together, whereby the flanges 16 are retained between the two parts 2, 3 and the open side of the box 14 is closed by second part 2. The sides of parts 2, 3 that are provided with texts and/or illustrations are present on the outside of the package 13. The text and/or illustration printed on residual part 6 is (are) discernable through the transparent box 14. The recesses 11 present in parts 2, 3 are positioned opposite each other and the formed package 13 can be suspended from a rack (not shown) by means of the common recess 11. The package 13 can be assembled manually or by means of special machines.

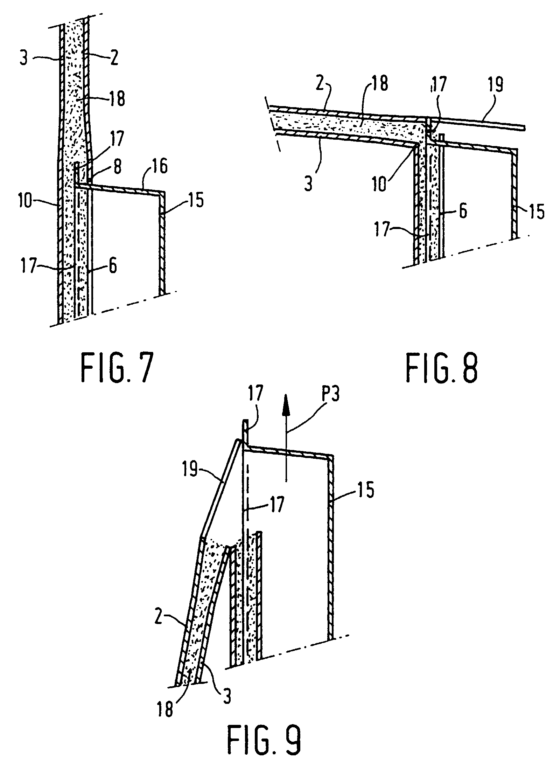

Figure 7 shows a detail of the package 13 shown in Figure 3, wherein the distance between the two parts 2, 3 is illustrated larger than in actual proportion for the sake of clarity, so that a glue 18 connecting the parts 2, 3 is discernable. The flanges 17 are clamped between the parts 2, 3. The glue 18 is a purpose-developed, natural latex-based rubber glue which permits silkscreen printing, which under the influence of pressure adheres to the sides of the plate 1 on which glue is present, but which does not adhere to the flanges 17. Preferably the glue comprises 0.005-2.1 kg of aqueous tinted pigment paste, 20-40 kg of water, 0.2-8 kg of carboxymethyl cellulose or other water-soluble cellulose derivates, 2-16.8 kg of hexylene glyclol, 0.2-8.2 kg of pH-regulating substances and 20-90 kg of rubber.

The opening of the package 13 with a view to taking out products (not shown) present in the box takes place as follows. The two parts 2, 3 are jointly folded in two about the folding line 7, which comprises the perforations 8, and the groove 10 in a direction indicated by arrow P2 (see Figures 4 and 5). Section 19 of first part 2, which is bounded by the folding line 7, the lines of cut 5 bounding recess 12 and the lines of cut 9 extending between folding line 7 and line of cut 5, is attached to the folded section 20 of plate 1, and as a result is likewise tilted with respect to box 14, as a result of which the flange 17 located near one end 21 of the box 14 will be released.

Figure 8 is a larger-scale illustration of a detail of the package 13, seen in the direction of the arrows VIII-VIII in Figure 4. After section 20 of plate I has substantially completely been folded in two against part 3, the box 14 is moved with respect to the plate 1 in a direction indicated by arrow P3, whereby the flanges 17 slide between the parts 2, 3 (see Figures 6 and 9). The perforations in the first part 2 are partly cut open by means of the flanges 17, after which the box 14 can be completely moved out of plate 1 and the products packed in said box can be removed therefrom. The text and/or illustrations on plate 1 are not damaged when the package 13 is opened and can also be examined after the package has been opened. Then the cardboard plate 1 and the plastic box 14 may be stored or disposed of separately.

It will not be possible to move the box 14 back between the parts 2, 3 of the plate 1, because the glue 18 will cause the parts 2 and 3 to stick together after the box 14 has been moved out of the plate 1.

It is also possible to apply the glue 18 only to those parts of the plate 1 that do not come into contact with the flanges 17.

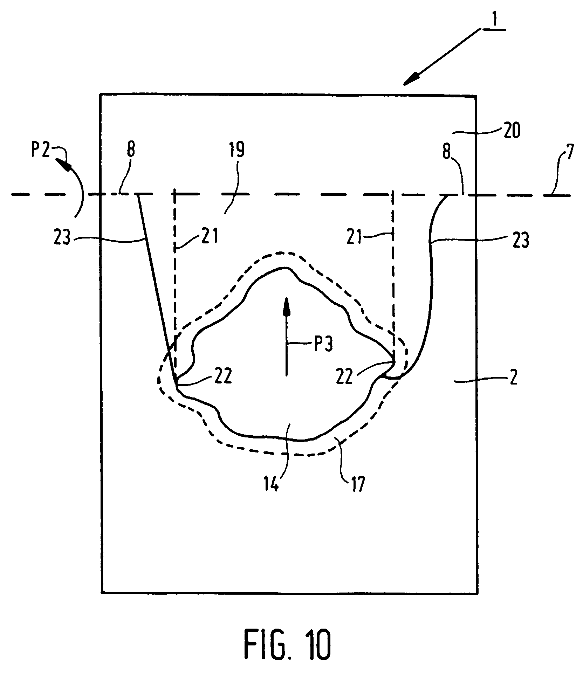

Figure 10 shots a second embodiment of a package 1 according to the invention, whereby the box 14 has an irregular shape adapted to the product to be packed. The box 14 is provided with a flange 17, which is clamped between the two plate parts 2, 3. The package 1 is provided with a folding line 7 spaced from the box 14 by some distance, about which the plate parts 2, 3 can be folded. Two tangent lines 21 extend from folding line 7, which touch the box 14 in points 22. The points 22 are spaced apart, seen in a direction parallel to the folding line 7, by a distance which corresponds with the width of the box 14. The tangent lines 21 are imaginary lines and need not be physically discernable on the package 1. The package 1 is furthermore provided with two lines of separation 23, which are positioned on sides of the tangent lines 21 facing away from each other and which extend from folding line 7 to box 14. The lines of separation 23 may touch the box 14 in points 22 or at a location beyond points 22. Both possibilities are illustrated in Figure 10. The lines of separation 23 are preferably provided with perforations. The first part 2 is also provided with perforations 8 on the folding line 7, which are positioned on sides of the lines of separation 23 facing away from each other. In order to open the package 1 the part of the package located above folding line 7 is bent in a direction indicated by arrow P2, as a result of which a tensile force is exerted on the section 19 of first part 2, which will cause the perforations on the lines of separation 23 and on the folding line 7 to be torn open. The section 19, which is bounded by the folding line 7, the box 14 and the lines of separation 23 is fixed to the folded section 20 of plate 1, and is folded in the direction indicated by arrow P2 together with section 20. After said folding the box 14 is moved in the direction indicated by arrow P3 until the flange 17 is fully released and the box 14 has been detached from the plate parts 2, 3.

## Claims

1. A package comprising a box (14) bounding a cavity which is open on one side and a plate (1) which closes the open side, which box (14) is near the open side provided with a flange (17) extending away from said box, whereby said plate (1) comprises two fixed-together parts (2, 3), the first part being provided with an opening through which the box projects whilst the flange of the box is slidably clamped between the first and second part and said parts (2, 3) being provided with parallel folding lines (7, 10) located near the flange (17) of said box, characterized in that:
- the first part is provided with two spaced apart imaginary tangent lines (21), which extend transversally from the folding line (7) and touch the recess (12);
- the first part (2) being further provided with two lines of separation (9, 23), each line of separation (9, 23) extending from said folding line (7) to the recess (12) and being located on one of said tangent lines (21) or on an area of the first part (2) located outside an area which is delimited by the imaginary tangent lines (21);
- the lines of separation (9, 23) and/or the folding line (7) on sides of the lines of separation (9, 23) facing away from each other being provided with perforations;
- the first part (2) is further provided with a foldable section (19) delimited by the folding line (7), the recess (12) and the two lines of separation (9, 23); and
- said foldable section (19) together with sections (20) of the first and second parts (2, 3) located on a side of the folding line (7) facing away from the recess (12) are jointly foldable about the folding lines (7, 10) with respect to the sections of the parts (1, 2) located on the side of the folding lines (7, 10) facing towards said recess (12);
- whereby by folding the section (19) about the folding lines (7, 10), the perforated lines are torn apart after which the box is slidable between the parts across the folding lines (7, 10).

2. A package according to claim 1, characterized in that said first part (2) is provided with perforations located on the folding line (7), which are positioned on sides of the lines of separation (9, 23) facing away from each other.

3. A package according to claim 1 or 2, characterized in that said lines of separation (9, 23) comprise lines of cut or are provided with perforations.

4. A package according to any one of the preceding claims, characterized in that the parts (2, 3) are interconnected along a folding line (4).

5. A package according to any one of the preceding claims, characterized in that by creating the recess (12) in the first part (2) of the plate (1) a residual part (6) is obtained, which is fixed to the second part (3) opposite to the open side of the box.

6. A package according to any one of the preceding claims, characterized in that said parts (2, 3, 6) are glued together.

7. A package according to any of the preceding claims characterized in that said plate is made of cardboard.

8. A package according to any of the preceding claims characterized in that said box is made of transparent plastic material.

## Patentansprüche

1. Packung, umfassend eine einen Hohlraum umgebende Schachtel (14), die an einer Seite offen ist, und eine Platte (1), welche die offene Seite verschließt, wobei die Schachtel (14) in der Nähe ihrer offenen Seite mit einem Flansch (17) versehen ist, der sich von der Schachtel wegerstreckt, wobei die Platte (1) zwei aneinander befestigte Teile (2, 3) umfaßt, wobei der erste Teil mit einer Öffnung versehen ist, durch welche die Schachtel hindurchragt, während der Flansch der Schachtel gleitend zwischen dem ersten und dem zweiten Teil eingeklemmt ist und die Teile (2, 3) mit parallelen Faltlinien (7, 10) versehen sind, die in der Nähe des Flansches (17) der Schachtel angeordnet sind, dadurch gekennzeichnet, daß:
- der erste Teil mit zwei voneinander beabstandeten, imaginären Tangentenlinien (21) versehen ist, welche sich transversal von der Faltlinie (7) wegerstrecken und die Ausnehmung (12) berühren;
- der erste Teil (2) des weiteren mit zwei Trennlinien (9, 23) versehen ist, wobei sich jede Trennlinie (9, 23) von der Faltlinie (7) zur Ausnehmung (12) erstreckt und auf einer der Tangentenlinien (21) oder auf einer Fläche des ersten Teiles (2) liegt, welche außerhalb einer Fläche liegt, die durch die imaginären Tangentenlinien (21) abgegrenzt wird;
- die Trennlinien (9, 23) und/oder die Faltlinie (7) auf den Seiten der Trennlinien (9, 23), welche voneinander abgewandt sind, mit Perforationen versehen sind;
- der erste Teil (2) des weiteren mit einem faltbaren Abschnitt (19) versehen ist, der durch die Faltlinie (7), die Ausnehmung (12) und die beiden Trennlinien (9, 23) abgegrenzt wird; und
- der faltbare Abschnitt (19) gemeinsam mit den Abschnitten (20) des ersten und des zweiten Teiles (2, 3), welche auf einer Seite der Faltlinie (7) angeordnet sind, die von der Ausnehmung (12) abgewandt ist, gemeinsam um die Faltlinien (7, 10) gefaltet werden kann, in bezug auf die Abschnitte der Teile (1, 2), welche auf der Seite der Faltlinien (7, 10) angeordnet sind, die der Ausnehmung (12) zugewandt ist;
- wobei durch Falten des Abschnittes (19) um die Faltlinien (7, 10) die perforierten Linien auseinandergetrennt werden, wonach die Schachtel zwischen den Teilen über die Faltlinien (7, 10) verschiebbar ist.

2. Packung nach Anspruch 1, dadurch gekennzeichnet, daß der erste Teil (2) mit auf der Faltlinie (7) angeordneten Perforationen versehen ist, welche auf Seiten der Trennlinien (9, 23) angeordnet sind, die voneinander abgewandt sind.

3. Packung nach Anspruch 1 oder 2, dadurch gekennzeichnet, daß die Trennlinien (9, 23) Schnittlinien umfassen oder mit Perforationen versehen sind.

4. Packung nach einem der vorhergehenden Ansprüche, dadurch gekennzeichnet, daß die Teile (2,3) entlang einer Faltlinie (4) miteinander verbunden sind.

5. Packung nach einem der vorhergehenden Ansprüche, dadurch gekennzeichnet, daß durch Schaffen der Ausnehmung (12) im ersten Teil (2) der Platte (1) ein Restteil (6) entsteht, der am zweiten Teil (3) gegenüber der offenen Seite der Schachtel befestigt wird.

6. Packung nach einem der vorhergehenden Ansprüche, dadurch gekennzeichnet, daß die Teile (2, 3, 6) zusammengeklebt sind.

7. Packung nach einem der vorhergehenden Ansprüche, dadurch gekennzeichnet, daß die Platte aus Karton besteht.

8. Packung nach einem der vorhergehenden Ansprüche, dadurch gekennzeichnet, daß die Schachtel aus transparentem Kunststoffmaterial besteht.

## Revendications

1. Emballage comprenant une boîte (14), qui délimite une cavité ouverte sur une face, et une plaque (1) qui ferme la face ouverte, ladite boîte (14) comportant près de la face ouverte une collerette (17) qui s'étend à l'opposé de ladite boîte, et ladite plaque (1) étant en deux éléments fixés l'un à l'autre (2,3), le premier élément comportant une ouverture à travers laquelle passe la boîte tandis que la collerette de la boîte est retenue de façon coulissante entre les premier et deuxième éléments, et les deux éléments (2,3) comportant des lignes de pliage parallèles (7,10) situées près de la collerette (17) de ladite boîte, caractérisé en ce que :
le premier élément comporte deux lignes de tangence imaginaires mutuellement espacées (21) qui s'étendent transversalement à partir de la ligne de pliage (7) et touchent l'ouverture (12) ;
le premier élément (2) comporte en outre deux lignes de séparation (9,23), chaque ligne de séparation (9,23) s'étendant de la dite ligne de pliage (7) à l'ouverture (12) et étant située sur une desdites lignes de tangence (21) ou sur une région du premier élément (2) située en dehors d'une région qui est délimitée par les lignes de tangence imaginaires (21) ;
les lignes de séparation (9,23) et/ou les lignes de pliage (7) sur les côtés des lignes de séparation (9,23) tournés à l'opposé l'un de l'autre comportent des perforations ;
le premier élément (2) comprend en outre une partie pliable (19) délimitée par la ligne de pliage (7), l'ouverture (12) et les deux lignes de séparation (9,23) ; et
ladite partie pliable (19) et les parties (20) des premier et deuxième éléments (2,3) situées sur un côté de la ligne de pliage (7) tourné à l'opposé de l'ouverture (12) sont pliables conjointement autour des lignes de pliage (7,10) par rapport aux parties des éléments (1,2) situées sur le côté des lignes de pliage (7, 10) tourné vers ladite ouverture (12) ;
de sorte que, par pliage de la partie(19) autour des lignes de pliage (7,10), les lignes perforées se déchirent complètement, après quoi on peut faire coulisser la boîte entre les éléments, au travers des lignes de pliage (7,10).

2. Emballage selon la revendication 1, caractérisé en ce que ledit premier élément (2) comporte des perforations situées sur la ligne de pliage (7), qui sont positionnées sur les côtés des lignes de séparation (9, 23) tournés à l'opposé l'un de l'autre.

3. Emballage selon la revendication 1 ou 2, caractérisé en ce que lesdites lignes de séparation (9, 23) comprennent des lignes d'incision ou comportent des perforations.

4. Emballage selon une quelconque des revendications précédentes, caractérisé en ce que les éléments (2,3) sont interconnectés le long d'une ligne de pliage (4).

5. Emballage selon une quelconque des revendications précédentes, caractérisé en ce que, par création de l'ouverture (12) dans le premier élément (2) de la plaque (1), on obtient une partie résiduelle (6) qui est fixée au deuxième élément (3) à l'opposé de la face ouverte de la boîte.

6. Emballage selon une quelconque des revendications précédentes, caractérisé en ce que lesdits éléments (2,3,6) sont collés ensemble.

7. Emballage selon une quelconque des revendications précédentes, caractérisé en ce que ladite plaque est en carton.

8. Emballage selon une quelconque des revendications précédentes, caractérisé en ce que ladite boîte est en matière plastique transparente.
